# EUROPÄISCHE PATENTANMELDUNG

(11) **EP 4 462 197 A1**
(43) Veröffentlichungstag der Anmeldung: **13.11.2024**
(21) Anmeldenummer: 23172716.5
(22) Anmeldetag: 11.05.2023
(51) Int. Cl.: G05B 15/02

(54) **ELEKTRONISCHES GERÄT UND VERFAHREN ZUR INTERAKTION MIT EINEM NUTZER IN EINEM HAUSHALT**

(71) Anmelder: BSH Hausgeräte GmbH, 81739 München (DE)
(72) Erfinder: Frattesi, Stefano, 89407 Dillingen a.d. Donau (DE); Wong, Desmond, 80798 München (DE); Schmietendorf, Wiebke, 81737 München (DE)

(57) **Zusammenfassung**

Es wird ein elektronisches Gerät (100, 150) zur Unterstützung eines Nutzers in einem Haushalt beschrieben. Das Gerät (100, 150) ist ausgebildet, Kontextinformation in Bezug auf den Nutzer und/oder den Haushalt zu ermitteln. Das Gerät (100, 150) ist ferner ausgebildet, in Abhängigkeit von der Kontextinformation eine Teilmenge mit ein oder mehreren Nutzerausgaben (202) aus einer Gesamtmenge von Nutzerausgaben (202) auszuwählen und ein oder mehrere Nutzerausgaben (202) aus der Teilmenge an den Nutzer auszugeben.

## Beschreibung

Das vorliegende Dokument befasst sich mit einem elektronischen Gerät, das innerhalb eines Haushalts, insbesondere in einer Küche, dazu genutzt werden kann, einen Nutzer bei einer Haushaltsaufgabe wie z.B. Kochen zu unterstützen.

Ein elektronisches Gerät, z.B. ein mobiles Anwendergerät (etwa ein Tablet PC oder ein Smartphone) mit einer Dockingstation, kann innerhalb eines Haushalts, insbesondere in einer Küche, verwendet werden, um einen Nutzer des elektronischen Geräts bei einer Haushaltsaufgabe, wie z. B. Kochen und/oder der Bedienung eines Hausgeräts, zu unterstützen. Das elektronische Gerät kann auf der Arbeitsplatte einer Küche neben dem Nutzer platziert werden, der an der Arbeitsplatte arbeitet (z.B. kocht).

Das elektronische Gerät kann ausgebildet sein, ein oder mehreren Nutzerausgaben in Bezug auf ein oder mehrere Haushaltsaufgaben an den Nutzer auszugeben, um den Nutzer bei der Durchführung der ein oder mehreren Haushaltsaufgaben zu unterstützen. Das vorliegende Dokument befasst sich mit der technischen Aufgabe, den Komfort und die Güte der Unterstützung in einem Haushalt zu erhöhen. Die technische Aufgabe wird durch den unabhängigen Anspruch gelöst. Bevorzugte Beispiele sind in den abhängigen Ansprüchen beschrieben.

Gemäß einem Aspekt wird ein elektronisches Gerät, insbesondere eine Dockingstation mit einem mobilen Anwendergerät (etwa einem Smartphone oder einem Tablet-PC) beschrieben. Die Dockingstation kann zum Andocken des mobilen Anwendergeräts ausgebildet sein. Das elektronische Gerät kann der Kombination aus Anwendergerät und Dockingstation entsprechen. Alternativ kann das elektronische Gerät dem Anwendergerät entsprechen. Das elektronische Gerät kann derart ausgebildet sein, dass das Gerät auf einem Tisch oder auf einer Arbeitsplatte in einer Küche platziert werden kann. Die Dockingstation kann ausgebildet sein, ein Anwendergerät der Größe DIN A4 oder DIN A5 (z.B. mit einer Displaygröße von bis zu 11 Zoll oder 12 Zoll) aufzunehmen. Zu diesem Zweck kann die Dockingstation eine Halterung zur Aufnahme des Anwendergeräts aufweisen.

Das elektronische Gerät kann zur Unterstützung eines Nutzers in einem Haushalt ausgebildet sein. In dem Haushalt können ein oder mehrere Hausgeräte, wie z.B. ein oder mehrere Küchenmaschinen, eine Spülmaschine, eine Waschmaschine, ein Wäschetrockner, ein Kochfeld, ein Backofen, eine Kaffeemaschine, ein Kühlschrank, etc., angeordnet sein. Das Gerät kann darauf ausgelegt sein, den Nutzer bei dem Betrieb bzw. der Steuerung der ein oder mehreren Hausgeräte zu unterstützen.

Das Gerät (d.h. das elektronische Gerät) ist ausgebildet, Kontextinformation in Bezug auf den Nutzer und/oder den Haushalt zu ermitteln. Die Kontextinformation kann Information in Bezug auf die ein oder mehreren Hausgeräte umfassen, die in dem Haushalt verfügbar und/oder angeordnet sind. Alternativ oder ergänzend kann die Kontextinformation Information in Bezug auf eine zeitlich vorausgehende und/oder bereits erfolgte Nutzung der ein oder mehreren Hausgeräte durch den Nutzer umfassen. Mit anderen Worten, die Kontextinformation kann Information dahingehend umfassen, wie die ein oder mehreren Hausgeräte bisher von dem Nutzer verwendet wurden (z.B. welche ein oder mehreren Betriebsprogramme eines Hausgeräts bisher von dem Nutzer verwendet wurden).

Alternativ oder ergänzend kann die Kontextinformation Information in Bezug auf eine Präferenz und/oder ein Interesse des Nutzers umfassen. Die Kontextinformation kann z.B. anzeigen, für welche Themen in Bezug auf den Haushalt sich der Nutzer interessiert.

Das Gerät (d.h. das elektronische Gerät) kann ausgebildet sein, über eine (drahtlose und/oder drahtgebundene) Kommunikationsverbindung auf eine externe Datenbank zuzugreifen, die insbesondere auf einem Internet- und/oder Cloud-Server angeordnet ist. Die Kontextinformation kann dann von der externen Datenbank (über die Kommunikationsverbindung) bezogen werden. Auf der Datenbank kann z.B. ein Nutzerprofil für den Nutzer gespeichert sein (z.B. als Teil eines Nutzerkontos). Die Kontextinformation kann Teil des Nutzerprofils und/oder des Nutzerkontos sein.

Das Gerät (d.h. das elektronische Gerät) ist ferner eingerichtet, in Abhängigkeit von der Kontextinformation (und ggf. unter Verwendung eines Auswahl-Algorithmus) eine Teilmenge mit ein oder mehreren Nutzerausgaben aus einer Gesamtmenge von Nutzerausgaben auszuwählen.

Das Gerät (d.h. das elektronische Gerät) kann ausgebildet sein, die Gesamtmenge von Nutzerausgaben, insbesondere periodisch (etwa täglich) jeweils eine neue Gesamtmenge von Nutzerausgaben, über eine (drahtlose und/oder drahtgebundene) Kommunikationsverbindung von einem externen Server zu beziehen. Es kann dann (ggf. periodisch) auf Basis der Kontextinformation eine Auswahl von ein oder mehreren Nutzerausgaben für die Teilmenge von ein oder mehreren Nutzerausgaben bewirkt werden.

Die unterschiedlichen Nutzerausgaben der Gesamtmenge von Nutzerausgaben können sich auf unterschiedliche Themen in Bezug auf den Nutzer und/oder den Haushalt beziehen. Das Gerät kann ausgebildet sein, insbesondere unter Verwendung des Auswahl-Algorithmus, die ein oder mehreren Nutzerausgaben aus der Gesamtmenge von Nutzerausgaben auszuwählen, die thematisch zu der Kontextinformation passen.

Die Gesamtmenge von Nutzerausgaben kann z.B. umfassen,
- ein oder mehrere Nutzerausgaben in Bezug auf ein oder mehrere Hausgeräte (ggf. auch ein oder mehrere Hausgeräte, die nicht Teil des Haushalts des Nutzers sind);
- ein oder mehrere Nutzerausgaben in Bezug auf eine mögliche Nutzung von ein oder mehreren Hausgeräten; und/oder
- ein oder mehrere Nutzerausgaben in Bezug auf jeweils ein Rezept zur Herstellung eines Nahrungsmittels.

Es können z.B. auf Basis der Kontextinformation die ein oder mehreren Hausgeräte ermittelt werden, die in dem Haushalt angeordnet sind. Es können dann die ein oder mehreren Nutzerausgaben aus der Gesamtmenge von Nutzerausgaben ausgewählt werden, die sich auf die ein oder mehreren Hausgeräte beziehen, die in dem Haushalt angeordnet sind. Alternativ oder ergänzend können die ein oder mehreren Nutzerausgaben aus der Gesamtmenge ausgewählt werden, die zu der bisherigen Nutzung der ein oder mehreren Hausgeräte durch den Nutzer passen.

Das Gerät (d.h. das elektronische Gerät) ist ferner eingerichtet, ein oder mehrere Nutzerausgaben aus der Teilmenge an den Nutzer auszugeben. Die einzelnen Nutzerausgaben können jeweils ein Bild bzw. eine Bildkarte umfassen. Das Gerät kann ausgebildet sein, die einzelnen Bilder bzw. Bildkarten der ein oder mehreren Nutzerausgaben der ermittelten Teilmenge von ein oder mehreren Nutzerausgaben auf einem Bildschirm, insbesondere auf einem berührungsempfindlichen Bildschirm, des Geräts anzuzeigen.

Des Weiteren kann das Gerät (d.h. das elektronische Gerät) ausgebildet sein, es dem Nutzer zu ermöglichen, insbesondere mittels Gestensteuerung, durch die einzelnen Bilder bzw. Bildkarten der ein oder mehreren Nutzerausgaben der ermittelten Teilmenge von ein oder mehreren Nutzerausgaben zu navigieren, um eine Nutzerausgabe zu selektieren. In Reaktion auf das Selektiven einer Nutzerausgabe kann bewirkt werden, dass zusätzliche Information zu dem Thema der Nutzerausgabe ausgegeben wird. Beispielsweise können Details zu einem Rezept und/oder zu der Nutzung eines Hausgeräts ausgegeben werden. Die Ausgabe der zusätzlichen Information kann in Form von ein oder mehreren Bildern, in Form von Text und/oder in Form von Sprache (d.h. akustisch) erfolgen.

Es wird somit ein elektronisches Gerät beschrieben, das eine Nutzer- und/oder Kontextspezifische Auswahl von Nutzerausgaben (insbesondere von Bildkarten) bewirkt, die dem Nutzer des Geräts zur Selektion angeboten werden. So kann der Nutzer in besonders komfortable Weise bei der Durchführung von ein oder mehreren Haushaltsaufgaben in einem Haushalt unterstützt werden.

Das Gerät (d.h. das elektronische Gerät) kann ausgebildet sein, zu erkennen, dass eine der ausgegebenen Nutzerausgaben von dem Nutzer selektiert wurde. Dies kann als Indiz dafür gewertet werden, dass sich der Nutzer für das mit der selektierten Nutzerausgabe assoziierte Thema interessiert. Das Gerät kann ausgebildet sein, Feedback-Information in Bezug auf die selektierte Nutzerausgabe für eine Aktualisierung der Kontextinformation bereitzustellen. Das Gerät kann insbesondere ausgebildet sein, den Auswahl-Algorithmus zur Ermittlung der Teilmenge von ein oder mehreren Nutzerausgaben aus der Gesamtmenge von Nutzerausgaben auf Basis der Feedback-Information anzupassen.

Es kann somit eine (ggf. kontinuierliche) Anpassung des Auswahl-Algorithmus zur Auswahl der ein oder mehreren Nutzerausgaben an die jeweils aktuellen Präferenzen und/oder Interessen des Nutzers bewirkt werden. So kann der Komfort für den Nutzer weiter erhöht werden.

Das Gerät (d.h. das elektronische Gerät) kann ausgebildet sein, den Nutzer aus einer Mehrzahl von unterschiedlichen Nutzern zu identifizieren. Das Gerät kann z.B. eine Kamera umfassen, die ausgebildet ist, ein Kamerabild des Nutzers zu erfassen. Der Nutzer kann auf Basis des Kamerabildes identifiziert werden. Alternativ oder ergänzend kann der Nutzer auf Basis eines Sprachprofils und/oder auf Basis einer expliziten Nutzeridentifikation (z.B. auf Basis einer Nutzerkennung für die Nutzung des Geräts) identifiziert werden.

Es kann dann die (Nutzer-spezifische) Kontextinformation für den identifizierten Nutzer aus einer Mehrzahl von unterschiedlichen Kontextinformationen für die entsprechende Mehrzahl von unterschiedlichen Nutzern ausgewählt werden. So kann eine besonders robuste und zuverlässige Nutzer-spezifische Auswahl von Nutzerausgaben bewirkt werden, um den Komfort des Nutzers weiter zu erhöhen.

In einigen Ausführungsformen ist das Gerät dafür eingerichtet, eine Eingabe vom Nutzer basierend auf den an den Nutzer ausgegebenen Nutzerausgaben zu empfangen und basierend auf der Eingabe die ein oder mehreren Hausgeräte zu steuern. Insbesondere kann eine Sprachanweisung des Nutzers empfangen werden und/oder eine Eingabe über das Touch-Display. Diese Sprachanweisung bzw. Eingabe kann sich z.B. auf einen Vorschlag beziehen, der in den ausgegebenen Nutzerausgaben angezeigt wurde, wie z.B. eine vorgeschlagene Einstellung eines Hausgeräts.

Gemäß einem weiteren Aspekt wird ein Verfahren zur Unterstützung eines Nutzers in einem Haushalt beschrieben. Das Verfahren umfasst das Ermitteln von Kontextinformation in Bezug auf den Nutzer und/oder den Haushalt (wobei die Kontextinformation z.B. von einem Server bezogen werden kann). Das Verfahren umfasst ferner das Auswählen, in Abhängigkeit von der Kontextinformation, einer Teilmenge mit ein oder mehreren Nutzerausgaben aus einer Gesamtmenge von Nutzerausgaben (wobei die Gesamtmenge z.B. 100 oder mehr, oder 500 oder mehr, oder 1000 oder mehr unterschiedliche Nutzerausgaben umfasst). Des Weiteren umfasst das Verfahren das Ausgeben (insbesondere das Anzeigen) der ein oder mehreren Nutzerausgaben aus der Teilmenge an den Nutzer.

In einer Ausführungsform umfasst das Verfahren weiterhin die Schritte
- Empfangen einer Eingabe vom Nutzer basierend auf den an den Nutzer ausgegebenen Nutzerausgaben und
- Steuern der ein oder mehreren Hausgeräte basierend auf der Eingabe.

Es ist zu beachten, dass jegliche Aspekte des in diesem Dokument beschriebenen Geräts und/oder des in diesem Dokument beschriebenen Verfahrens in vielfältiger Weise miteinander kombiniert werden können. Insbesondere können die Merkmale der Patentansprüche in vielfältiger Weise miteinander kombiniert werden.

Im Weiteren wird die Erfindung anhand von in der beigefügten Zeichnung dargestellten Ausführungsbeispielen näher beschrieben. Dabei zeigen
- Figur 1a: eine beispielhafte Dockingstation in einer perspektivischen Ansicht;
- Figur 1b: eine beispielhafte Dockingstation in einer Seitenansicht;
- Figur 1c: ein beispielhaftes Anwendergerät mit einem berührungsempfindlichen Bildschirm;
- Figur 2: ein beispielhaftes System zur Unterstützung eines Nutzers in einem Haushalt; und
- Figur 3: ein Ablaufdiagramm eines beispielhaften Verfahrens zur Unterstützung eines Nutzers in einem Haushalt.

Wie weiter oben beschrieben, zielt das vorliegende Dokument darauf ab, den Komfort und die Güte der Unterstützung eines Nutzers in einem Haushalt bei der Durchführung zumindest einer Haushaltsaufgabe zu erhöhen. Die folgenden Aspekte werden im Zusammenhang mit einer Dockingstation beschrieben. Es wird darauf hingewiesen, dass diese Aspekte im Allgemeinen auf ein elektronisches Gerät anwendbar sind, wobei das elektronische Gerät z.B. der Kombination der Dockingstation mit einem mobilen Anwendergerät entspricht.

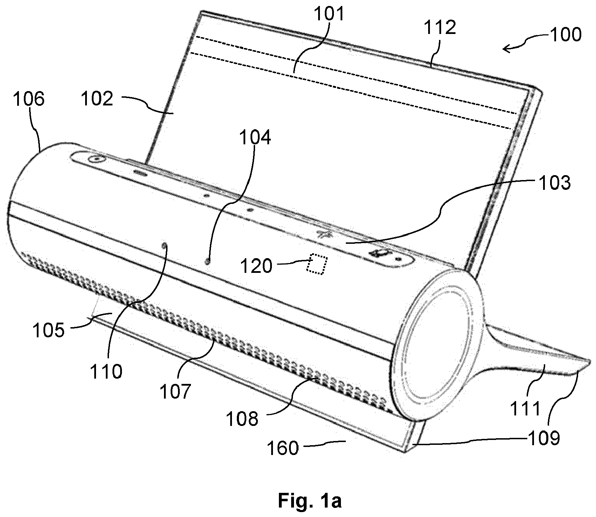

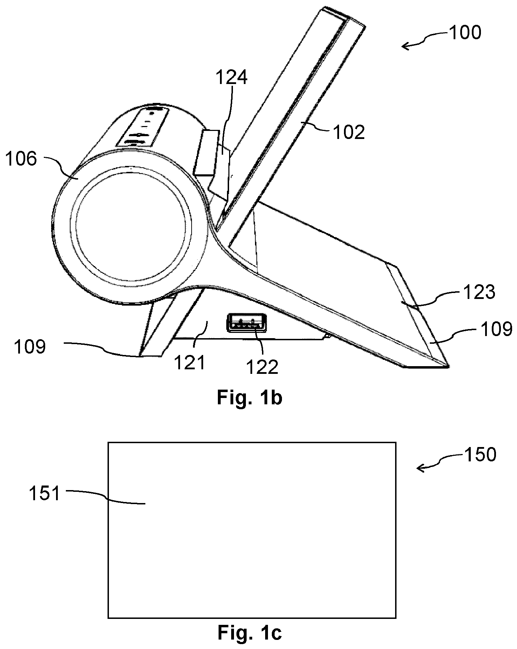

Die Figuren 1a und 1b zeigen eine beispielhafte Dockingstation 100. Die Dockingstation 100 weist einen Hauptkörper 106 auf, der, wie in Fig. 1a dargestellt, eine zylindrische Form aufweisen kann. Der Hauptkörper 106 kann ein oder mehrere elektronische Komponenten wie z.B. eine Steuereinheit 120, etwa einen Mikrocontroller, der Dockingstation 100 umfassen. Ferner kann der Hauptkörper 106 ein Bedienfeld 103 mit ein oder mehreren Bedienelementen, insbesondere Bedientasten, aufweisen. Das Bedienfeld 103 kann es einem Benutzer ermöglichen, mit der Dockingstation 100 zu interagieren, z. B. zur Lautstärkeregelung der Lautsprecher oder zur Interaktion mit einem Sprachassistenten.

Alternativ oder zusätzlich zu einem Bedienfeld 103 kann die Dockingstation 100 einen Gestensensor 104 (z. B. am Hauptkörper 106) umfassen, der derart ausgebildet ist, dass der Gestensensor 104 Gestendaten bezüglich einer von einem Nutzer der Dockingstation 100 ausgeführten (Hand-)Geste erfasst. Die Dockingstation 100 kann in Abhängigkeit von den Gestendaten (d.h. in Abhängigkeit von den Messdaten des Gestensensors 104) gesteuert werden.

Der Hauptkörper 106 kann ferner ein oder mehrere Lautsprecher 108 umfassen, die ausgebildet sind, ein Audiosignal zu emittieren. Die ein oder mehreren Lautsprecher 108 können an einer Stirnseite und/oder an einer Oberfläche des (zylindrischen) Hauptkörpers 106 oder in einer (zylindrischen) akustischen Kammer innerhalb des Hauptkörpers 106 angeordnet sein. Darüber hinaus kann die Dockingstation 100 ein oder mehrere (passive) Akustikstrahler 107 umfassen.

Die Dockingstation 100 kann ein oder mehrere Standbeine 105, 111 umfassen, insbesondere ein Vorder-Standbein 105 auf der dem Nutzer zugewandten Vorderseite und/oder ein Hinter-Standbein 111 an der Rückseite der Dockingstation 100. Die ein oder mehreren Standbeine 105, 111 können am Hauptkörper 106 befestigt sein und sich von dem Hauptkörper 106 bis zu dem Boden 160 erstrecken, auf dem die Dockingstation 100 angeordnet ist. Die ein oder mehreren Standbeine 105, 111 können sich entlang der Längsachse des (zylindrischen) Hauptkörpers 106 erstrecken. Dabei können die Standbeine 105, 111 jeweils die Form einer Platte aufweisen.

Die ein oder mehreren Standbeine 105, 111 können jeweils ein Isolatorelement 109, z.B. aus Silikon, am Ende des jeweiligen Standbeins 105, 111 aufweisen, das in Kontakt mit dem Boden 160 steht, auf dem die Dockingstation 100 platziert ist. Durch die Verwendung eines Isolatorelements 109 kann die Dockingstation 100 stabil platziert werden. Ferner kann die Dockingstation 100 gegen (akustische) Vibrationen isoliert sein.

Darüber hinaus kann die Dockingstation 100 eine Halterung, insbesondere eine Stützvorrichtung, 102 umfassen, die sich vom Hauptkörper 106 nach oben (d. h. von dem Boden 160 weg) erstreckt. Die Halterung 102 kann einen Winkel zum Boden 160 zwischen 45° und 75° aufweisen, wenn die Dockingstation 100 auf dem Boden 160 platziert ist. Die Halterung 102 kann als Stütze für einen typischen Tablet-PC (z. B. mit einer Bildschirmgröße zwischen 8 Zoll und 13 Zoll) konzipiert sein. Die Halterung 102 kann sich entlang der Längsachse des Hauptkörpers 106 (von einer Stirnfläche zur anderen Stirnfläche des Hauptkörpers 106) erstrecken.

Die Halterung 102 kann ein oder mehrere Isolatorstreifen 101 aufweisen, die sich horizontal über die Platte der Halterung 102 erstrecken können. Weiterhin kann die Halterung 102 einen Isolatorstreifen 112 am oberen Ende der Platte der Halterung 102 umfassen. Durch die Verwendung von Isolatorstreifen 101, 112 kann ein Endgerät, z.B. ein Tablet-PC, in stabiler Weise auf der Halterung 102 platziert werden.

Ferner kann die Dockingstation 100 ein Basiselement 124 umfassen, wie in Fig. 1b dargestellt, das an der Kontaktstelle zwischen dem Hauptkörper 106 und der Halterung 102 angeordnet ist. Das Basiselement 124 kann einen Spalt aufweisen, in den der untere Rand eines Anwendergeräts, insbesondere eines Tablet-PCs, platziert werden kann, um das Anwendergerät stabil auf der Halterung 102 zu halten. Das Basiselement 124 kann aus einem elastischen Material bestehen, um Schwingungen der Dockingstation 100 zu dämpfen. Alternativ oder zusätzlich kann das Basiselement 124 ein oder mehrere Sensoren (z. B. Gewichtssensoren) zur Erkennung eines Anwendergeräts auf der Halterung 102 umfassen.

Die Steuereinheit 120 der Dockingstation 100 kann derart ausgebildet sein, dass automatisch eine Kommunikationsverbindung mit dem Anwendergerät hergestellt wird, wenn festgestellt wird, dass das Anwendergerät auf der Halterung 102 der Dockingstation 100 platziert wurde. Beispielsweise kann eine drahtlose Kommunikationsverbindung, z.B. eine Bluetooth-Verbindung, zwischen der Dockingstation 100 und dem Anwendergerät hergestellt werden.

Die Steuereinheit 120 der Dockingstation 100 kann ausgebildet sein, über die Kommunikationsverbindung ein Audiosignal von dem Anwendergerät zu empfangen und über die ein oder mehreren Lautsprecher 107, 108 der Dockingstation 100 auszugeben. Alternativ oder zusätzlich kann die Steuereinheit 120 ausgebildet sein, das Anwendergerät über die Kommunikationsverbindung zu steuern (z.B. anhand von Gestensteuerung und/oder Sprachsteuerung).

Die Dockingstation 100 kann ein oder mehrere Mikrofone 110 umfassen, z. B. am Hauptkörper 106, die ausgebildet sind, akustische Mikrofonsignale, insbesondere Sprachsignale, zu erfassen, z.B. um eine Sprachsteuerung der Dockingstation 100 und/oder eines mit der Dockingstation 100 gekoppelten Anwendergeräts zu ermöglichen.

Fig. 1b zeigt eine Seitenansicht der Dockingstation 100. Die Dockingstation 100 kann ein Gehäuse 121 für ein oder mehrere elektronische Bauelemente (z.B. für die Steuereinheit 120) umfassen. Das Gehäuse 121 kann zwischen dem Vorder-Standbein 105 und dem Hinter-Standbein 111 der Dockingstation 100 angeordnet sein. Ferner kann die Dockingstation 100 (z.B. am Gehäuse 121) eine Daten- und/oder Stromversorgungsschnittstelle 122 (z.B. eine USB-Schnittstelle) zur Datenkommunikation und/oder zur Stromversorgung umfassen. Darüber hinaus kann die Dockingstation 100 eine Aussparung 123 für ein Netzkabel zur Stromversorgung der Dockingstation 100 aufweisen.

Die Dockingstation 100 kann für den Einsatz in einer Küche ausgebildet sein. Die Dockingstation 100 kann in Verbindung mit einem mobilen Anwendergerät, z.B. einem Smartphone und/oder Tablet-PC, verwendet werden, das in der Halterung 102 der Dockingstation 100 angeordnet ist. Darüber hinaus kann die Dockingstation 100 ausgebildet sein, als Lautsprecher zur Wiedergabe von Audiosignalen zu dienen, die von einem Internetserver und/oder von einem Anwendergerät bereitgestellt werden.

Fig. 1c zeigt ein beispielhaftes Anwendergerät 150 mit einem berührungsempfindlichen Bildschirm 151 als Teil der Benutzerschnittstelle des Anwendergeräts 150. Das Anwendergerät 150 kann ausgebildet sein, in die Halterung 102 der Dockingstation 100 gestellt zu werden. Ferner kann das Anwendergerät 150 ausgebildet sein, eine (drahtlose oder drahtgebundene) Kommunikationsverbindung mit der Dockingstation 100 aufzubauen, z.B. um eine Audiowiedergabe über die Dockingstation 100 zu ermöglichen.

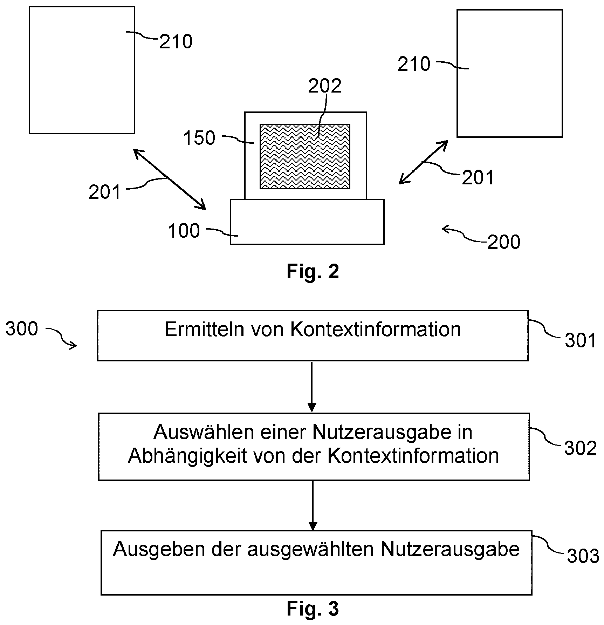

Das Anwendergerät 150 und/oder die Dockingstation 100 können in einem Haushalt verwendet werden, in dem ein oder mehrere Hausgeräte angeordnet sind. Beispielhafte Hausgeräte sind: ein oder mehrere Küchenmaschinen (z.B. mit Garfunktion), eine Spülmaschine, ein Backofen, ein Kühlschrank, eine Waschmaschine, ein Wäschetrockner, etc. Fig. 2 zeigt ein beispielhaftes System 200, das das Anwendergerät 150 und/oder die Dockingstation 100 umfasst, und das ein oder mehrere Hausgeräte 210 umfasst. Das Anwendergerät 150 und/oder die Dockingstation 150 können ausgebildet sein, über ein oder mehrere (drahtlose und/oder drahtgebundene) Kommunikationsverbindungen 201 mit den ein oder mehreren Hausgeräten 210 zu kommunizieren, z.B. um eine Steuerung der ein oder mehreren Hausgeräte 210 zu ermöglichen und/oder um Information von den ein oder mehreren Hausgeräten 210 zu ermitteln.

Das Anwendergerät 150 und/oder die Dockingstation 100 (allgemein das elektronische Gerät 100, 150) können eingerichtet sein, Kontextinformation in Bezug auf einen bestimmten Kontext in dem Haushalt zu ermitteln. Die Kontextinformation kann z.B. angeben,
- welche ein oder mehreren Hausgeräte 210, insbesondere welche ein oder mehreren Typen von Hausgeräten 210, in dem Haushalt angeordnet sind;
- wie ein bestimmter Nutzer in dem Haushalt die ein oder mehreren Hausgeräte 210 bisher genutzt hat (z.B. welche Betriebsprogramme genutzt wurden); und/oder
- ein oder mehrere Präferenzen und/oder Interessen des Nutzers.

Das elektronische Gerät 100, 150 kann ferner eingerichtet sein, eine Gesamtmenge von Nutzerausgaben 202 zu ermitteln, die als Unterstützung für die Durchführung von ein oder mehreren Haushaltaufgaben an den Nutzer ausgegeben werden können (z.B. an dem Bildschirm 151 des Anwendergeräts 150 angezeigt werden können). Die Nutzerausgaben 202 können jeweils die Form einer Bildkarte aufweisen, die von dem Nutzer ausgewählt (z.B. angeklickt) werden kann, um weitere Information zu dem Thema zu erhalten, mit dem die jeweilige Nutzerausgabe 202 assoziiert ist. Die einzelnen Nutzerausgaben 202 können sich auf unterschiedliche Themen (z.B. auf unterschiedliche Hausgeräte und/oder auf unterschiedliche Nutzungen eines Hausgeräts) in einem Haushalt beziehen.

Das elektronische Gerät 100, 150 kann ausgebildet sein, auf Basis der Kontextinformation eine Teilmenge von ein oder mehreren Nutzerausgaben 202 aus der Gesamtmenge von Nutzerausgaben 202 auszuwählen (wobei die Teilmenge z.B. 50% oder weniger, insbesondere 20% oder weniger, der Nutzerausgaben 202 aus der Gesamtmenge umfasst). Dabei können die ein oder mehreren Nutzerausgaben 202 auswählt werden, die thematisch mit der Kontextinformation korrelieren.

Es können dann bevorzugt oder ausschließlich die ein oder mehreren Nutzerausgaben 202 aus der Teilmenge an den Nutzer ausgegeben werden. Es kann somit eine Nutzer- und/oder Haushalts-spezifische Auswahl von Nutzerausgaben 202 bewirkt werden, um den Komfort für den Nutzer zu erhöhen.

Ein Smart Home-Gerät 100, 150 kann z.B. beim Onboarding mit einem oder mehreren Benutzerkonten von ein oder mehreren Nutzern verknüpft werden. Über eine Schnittstelle (z.B. über ein API, Applikation Programing Interface) kann das Gerät 100, 150 Kontextinformation (z.B. Benutzereinstellungen und/oder Systemkonfigurationen) ermitteln, die z.B. in einer Datenbank in der Cloud, auf die über diese Konten zugegriffen werden kann, hinterlegt ist. Beispielhafte Kontextinformation umfasst: Kocheinstellungen, ein oder mehrere verfügbare Hausgeräte 210 in dem Haushalt, Hersteller der ein oder mehreren Hausgeräte 210, Eigenschaften der ein oder mehreren Hausgeräte 210, Funktionalitäten und/oder Komponenten der ein oder mehreren Hausgeräte 210, persönliche Interessen des Nutzers, Ernährung und/oder Präferenzen des Nutzers, andere Information in Zusammenhang mit der Verwendung eines Hausgeräts 210, etc.

Über ein Einstellungsmenü des Geräts 100, 150 oder über eine anderweitige Benutzerschnittstelle können ein oder mehrere Präferenzen des Nutzers individuell (als Kontextinformation) hinzugefügt werden. Diese Präferenzen können (als Kontextinformation) in der Datenbank gespeichert werden.

Das Smart-Gerät 100, 150 kann ausgebildet sein, die o.g. Kontextinformation aus der Cloud-Datenbank abzurufen. Das Gerät 100, 150 kann ferner eingerichtet sein, anhand eines Auswahl-Algorithmus und unter Berücksichtigung der Kontextinformation ein oder mehrere Nutzerausgaben 202 (z.B. jeweils in Form einer Bildkarte) zu selektiveren. Dabei können die ein oder mehreren Nutzerausgaben 202 ausgewählt werden, die angepasst sind, an
- ein oder mehrere Präferenzen des Nutzers;
- die ein oder mehreren Hausgeräte 210 des Systems 200 (d.h. des Haushalts);
- den Hersteller und/oder die Marke der ein oder mehreren Hausgeräte 210;
- die bisherige Nutzung der ein oder mehreren Hausgeräte 210; und/oder
- die Nutzung ein oder mehrerer anderer digitaler Dienste.

Eine Nutzerausgabe 202 (z.B. eine Bildkarte) kann von dem Nutzer an dem Gerät 100, 150 ausgewählt werden (z.B. durch eine Geste, durch Sprache und/oder durch Berührung des Bildschirms 151). Feedback-Information in Bezug auf die ausgewählte Nutzerausgabe 202 kann zur Anpassung der Kontextinformation in der Datenbank berücksichtigt werden.

Es kann somit eine präzise Auswahl von Nutzerausgaben 202 bewirkt werden, um den Komfort für den Nutzer zu erhöhen. Das Gerät 100, 150 kann ausgebildet sein (unter Verwendung von mehreren Nutzerkonten und/oder Nutzerprofilen), die Auswahl der Nutzerausgaben 202 Nutzer-spezifisch für eine Vielzahl von unterschiedlichen Nutzern zu bewirken.

Es wird somit ein Gerät 100, 150 mit einem Bildschirm 151 beschrieben, das ausgebildet ist, dem Nutzer nur relevante Informationen (d.h. Nutzerausgaben 202) auszugeben, insbesondere anzuzeigen. Zu diesem Zweck können Präferenzen berücksichtigt werden, die von einem verknüpften Benutzerkonto und/oder von einem Lernsystem abgerufen werden. Der Benutzer kann diese Einstellungen auf dem Gerät 100, 150 selbst, über ein bestimmtes Menü und/oder während des Onboardings des Gerät 100, 150 und/oder über eine 3rd-Party-App bzw. einen 3rd-Party-Dienst und/oder per Sprache festlegen.

In einem Karussell können ggf. nur Bildkarten (d.h. Nutzerausgaben 202) angezeigt werden, die den Vorlieben des spezifischen Nutzers entsprechen. Die einzelnen Bildkarten können navigierbar und auswählbar sein, über einen Gestensensor im Gerät 100, 150 und/oder per Sprache und/oder per Berührung.

Sobald der Nutzer eine bestimmte Bildkarte auswählt, kann Feedback-Information in Bezug auf die Auswahl bereitgestellt werden, um den Auswahl-Algorithmus zur Auswahl der Nutzerausgaben 202 anzulernen. Dabei kann z.B. das Präferenz-Ranking in der Datenbank zu dem spezifischen Thema der ausgewählten Bildkarte erhöht werden. So können die Personalisierung und/oder die Güte der Auswahl von Nutzerausgaben 202 für den Nutzer weiter erhöht werden. Verschiedene Nutzer in demselben Haushalt können durch das Gerät 100, 150 selbst erkannt werden, und die Auswahl von Bildkarten kann an den jeweiligen Nutzer angepasst werden.

Fig. 3 zeigt ein Ablaufdiagramm eines (ggf. Computer-implementierten) Verfahrens 300 zur Unterstützung eines Nutzers in einem Haushalt. Das Verfahren 300 umfasst das Ermitteln 301 von Kontextinformation in Bezug auf den Nutzer und/oder den Haushalt. Die Kontextinformation kann z.B. aus einem Nutzerprofil für den Nutzer bezogen werden. Das Nutzerprofil kann z.B. auf einer externen Datenbank (z.B. auf einem Internet- und/oder Cloud-Server) gespeichert sein. Die Kontextinformation kann z.B. angeben,
- die ein oder mehreren Hausgeräte 210, die in dem Haushalt angeordnet und/oder genutzt werden;
- Information in Bezug auf die bisherige Nutzung der ein oder mehreren Hausgeräte 210 (wie z.B. ein oder mehrere typische Betriebsprogramme); und/oder
- ein oder mehrere persönliche Präferenzen des Nutzers (z.B. in Bezug auf ein oder mehrere Themen, die den Nutzer interessieren).

Das Verfahren 300 umfasst ferner das Auswählen 302, in Abhängigkeit von der Kontextinformation, einer Teilmenge mit ein oder mehreren Nutzerausgaben 202 aus einer Gesamtmenge von Nutzerausgaben 202. Das Auswählen 302 kann unter Verwendung eines Auswahl-Algorithmus erfolgen. Die unterschiedlichen Nutzerausgaben 202 können jeweils als Bild bzw. Bildkarte ausgebildet sein, wobei die einzelnen Bilder bzw. Bildkarten auf einem Bildschirm 151 angezeigt werden können. Die einzelnen Nutzerausgaben 202 können jeweils mit einem bestimmten Thema assoziiert sein. Beispielhafte Themen sind,
- ein Thema in Bezug auf ein Hausgerät 210 (z.B. ein bestimmtes Betriebsprogramm, eine bestimmte Empfehlung zur Nutzung des Hausgeräts 210, etc.); und/oder
- ein Rezept zur Herstellung eines Nahrungsmittels.

Die Gesamtmenge von Nutzerausgaben 202 kann (z.B. täglich neu) von einer externen Datenbank bereitgestellt werden. Es kann eine Nutzer- und/oder Haushalts-spezifische Auswahl einer Teilmenge von ein oder mehreren Nutzerausgaben 202 bewirkt werden.

Des Weiteren umfasst das Verfahren 300 das Ausgeben 303 der ein oder mehreren Nutzerausgaben 202 aus der Teilmenge an den Nutzer. Die ein oder mehreren Nutzerausgaben 202 können z.B. auf einem Bildschirm 151 dargestellt werden. Ferner kann es dem Nutzer ermöglicht werden, eine Nutzerausgabe 202 zu selektieren (z.B. durch Selektiven einer angezeigten Nutzerausgabe 202). Es können dann weitere Details zu dem Thema bereitgestellt werden, mit dem die Nutzerausgabe 202 assoziiert ist.

Ferner kann es durch die Selektion einer Nutzerausgabe 202 ermöglicht werden, das mit der selektierten Nutzerausgabe 202 assoziierte Hausgerät 210 fernzusteuern. Die Selektion der Nutzerausgabe 202 kann an einem elektronischen Gerät 100, 150 bewirkt werden, und die Fernsteuerung des Hausgeräts 210 kann ggf. von diesem elektronischen Gerät 100, 150 bewirkt werden (z.B. über eine (drahtlose) Kommunikationsverbindung 201 zwischen dem Gerät 100, 150 und dem Hausgerät 210).

Es kann also vorgesehen sein, eine Eingabe vom Nutzer basierend auf den an den Nutzer ausgegebenen Nutzerausgaben zu empfangen und basierend auf der Eingabe die ein oder mehreren Hausgeräte zu steuern. Beispielsweise kann eine Sprachanweisung des Nutzers empfangen werden. Diese Sprachanweisung kann sich z.B. auf einen Vorschlag beziehen, der in den ausgegebenen Nutzerausgaben angezeigt wurde, wie z.B. eine vorgeschlagene Einstellung eines Hausgeräts 210.

Durch die in diesem Dokument beschriebenen Maßnahmen können der Komfort und die Güte der Unterstützung eines Nutzers in einem Haushalt in zuverlässiger Weise erhöht werden.

Die vorliegende Erfindung ist nicht auf die gezeigten Ausführungsbeispiele beschränkt. Insbesondere ist zu beachten, dass die Beschreibung und die Figuren nur das Prinzip des vorgeschlagenen Geräts und/oder des vorgeschlagenen Verfahrens veranschaulichen sollen.

## Patentansprüche

1. Elektronisches Gerät (100, 150) zur Unterstützung eines Nutzers in einem Haushalt, wobei das Gerät (100, 150) ausgebildet ist,
- Kontextinformation in Bezug auf den Nutzer und/oder den Haushalt zu ermitteln;
- in Abhängigkeit von der Kontextinformation eine Teilmenge mit ein oder mehreren Nutzerausgaben (202) aus einer Gesamtmenge von Nutzerausgaben (202) auszuwählen; und
- ein oder mehrere Nutzerausgaben (202) aus der Teilmenge an den Nutzer auszugeben.

2. Elektronisches Gerät (100, 150) gemäß Anspruch 1, wobei die Kontextinformation umfasst,
- Information in Bezug auf ein oder mehrere Hausgeräte (210), die in dem Haushalt verfügbar sind; und/oder
- Information in Bezug auf eine zeitlich vorausgehende Nutzung der ein oder mehreren Hausgeräte (210) durch den Nutzer.

3. Elektronisches Gerät (100, 150) gemäß einem der vorhergehenden Ansprüche, wobei die Kontextinformation Information in Bezug auf eine Präferenz und/oder ein Interesse des Nutzers umfasst.

4. Elektronisches Gerät (100, 150) gemäß einem der vorhergehenden Ansprüche, wobei das Gerät (100, 150) ausgebildet ist,
- über eine Kommunikationsverbindung (201) auf eine externe Datenbank zuzugreifen, die insbesondere auf einem Internet-Server angeordnet ist; und
- die Kontextinformation von der externen Datenbank zu beziehen.

5. Elektronisches Gerät (100, 150) gemäß einem der vorhergehenden Ansprüche, wobei das Gerät (100, 150) ausgebildet ist,
- zu erkennen, dass eine der ausgegebenen Nutzerausgaben (202) von dem Nutzer selektiert wurde; und
- Feedback-Information in Bezug auf die selektierte Nutzerausgabe (202) für eine Aktualisierung der Kontextinformation bereitzustellen.

6. Elektronisches Gerät (100, 150) gemäß Anspruch 5, wobei das Gerät (100, 150) ausgebildet ist, einen Auswahl-Algorithmus zur Ermittlung der Teilmenge von ein oder mehreren Nutzerausgaben (202) aus der Gesamtmenge von Nutzerausgaben (202) auf Basis der Feedback-Information anzupassen.

7. Elektronisches Gerät (100, 150) gemäß einem der vorhergehenden Ansprüche, wobei
- eine Nutzerausgabe (202) jeweils ein Bild umfasst; und
- das Gerät (100, 150) ausgebildet ist,
- die einzelnen Bilder der ein oder mehreren Nutzerausgaben (202) der ermittelten Teilmenge von ein oder mehreren Nutzerausgaben (202) auf einem Bildschirm (151), insbesondere auf einem berührungsempfindlichen Bildschirm, des Geräts (100, 150) anzuzeigen; und
- es dem Nutzer zu ermöglichen, insbesondere mittels Gestensteuerung, durch die einzelnen Bilder der ein oder mehreren Nutzerausgaben (202) der ermittelten Teilmenge von ein oder mehreren Nutzerausgaben (202) zu navigieren, um eine Nutzerausgabe (202) zu selektieren.

8. Elektronisches Gerät (100, 150) gemäß einem der vorhergehenden Ansprüche, wobei
- sich die unterschiedlichen Nutzerausgaben (202) der Gesamtmenge von Nutzerausgaben (202) auf unterschiedliche Themen in Bezug auf den Nutzer und/oder den Haushalt beziehen; und
- das Gerät (100, 150) ausgebildet ist, insbesondere unter Verwendung eines Auswahl-Algorithmus, die ein oder mehreren Nutzerausgaben (202) aus der Gesamtmenge von Nutzerausgaben (202) auszuwählen, die thematisch zu der Kontextinformation passen.

9. Elektronisches Gerät (100, 150) gemäß einem der vorhergehenden Ansprüche, wobei das Gerät (100, 150) ausgebildet ist,
- den Nutzer aus einer Mehrzahl von unterschiedlichen Nutzern zu identifizieren; und
- die Kontextinformation für den identifizierten Nutzer aus einer Mehrzahl von unterschiedlichen Kontextinformationen für die entsprechende Mehrzahl von unterschiedlichen Nutzern auszuwählen.

10. Elektronisches Gerät (100, 150) gemäß einem der vorhergehenden Ansprüche, wobei die Gesamtmenge von Nutzerausgaben (202) umfasst,
- ein oder mehrere Nutzerausgaben (202) in Bezug auf ein Hausgerät (210);
- ein oder mehrere Nutzerausgaben (202) in Bezug auf eine mögliche Nutzung von einem Hausgerät (210); und/oder
- ein oder mehrere Nutzerausgaben (202) in Bezug auf ein Rezept zur Herstellung eines Nahrungsmittels.

11. Elektronisches Gerät (100, 150) gemäß einem der vorhergehenden Ansprüche, wobei das Gerät (100, 150) ausgebildet ist, die Gesamtmenge von Nutzerausgaben (202), insbesondere periodisch jeweils eine neue Gesamtmenge von Nutzerausgaben (202), über eine Kommunikationsverbindung (201) von einem externen Server zu beziehen.

12. Elektronisches Gerät (100, 150) gemäß einem der vorhergehenden Ansprüche, wobei das Gerät dafür eingerichtet ist, eine Eingabe vom Nutzer basierend auf den an den Nutzer ausgegebenen Nutzerausgaben (202) zu empfangen und basierend auf der Eingabe die ein oder mehreren Hausgeräte (210) zu steuern.

13. Verfahren (300) zur Unterstützung eines Nutzers in einem Haushalt, wobei das Verfahren (300) umfasst,
- Ermitteln (301) von Kontextinformation in Bezug auf den Nutzer und/oder den Haushalt;
- Auswählen (302), in Abhängigkeit von der Kontextinformation, einer Teilmenge mit ein oder mehreren Nutzerausgaben (202) aus einer Gesamtmenge von Nutzerausgaben (202); und
- Ausgeben (303) der ein oder mehreren Nutzerausgaben (202) aus der Teilmenge an den Nutzer.

14. Verfahren nach Anspruch 13, mit den weiteren Schritten
- Empfangen einer Eingabe vom Nutzer basierend auf den an den Nutzer ausgegebenen Nutzerausgaben und
- Steuern der ein oder mehreren Hausgeräte basierend auf der Eingabe.
